(19) **Europäisches Patentamt / European Patent Office / Office européen des brevets**

(11) **EP 1 641 947 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(21) Anmeldenummer: **04741838.9**

(22) Anmeldetag: **18.06.2004**

(51) Int Cl.:
*C22B 9/00* *(2006.01)*       *F27B 14/06* *(2006.01)*
*F27D 11/06* *(2006.01)*       *H01F 1/057* *(2006.01)*
*C22C 1/02* *(2006.01)*

(86) Internationale Anmeldenummer:
**PCT/EP2004/051168**

(87) Internationale Veröffentlichungsnummer:
**WO 2005/003396 (13.01.2005 Gazette 2005/02)**

(54) **Verfahren zur Herstellung von leitfähigen Legierungen in einem rotierenden Schmelztiegel**

Method for producing conductive alloys in a rotatable melt crucible

Procédé pour la production d'alliages conducteurs dans un four de fusion à creuset rotatif

(84) Benannte Vertragsstaaten:
**AT BE BG CH CY CZ DE DK EE ES FI FR GB GR HU IE IT LI LU MC NL PL PT RO SE SI SK TR**

(30) Priorität: **07.07.2003 DE 10331152**

(43) Veröffentlichungstag der Anmeldung:
**05.04.2006 Patentblatt 2006/14**

(73) Patentinhaber:
• **Leibniz-Institut für Festkörper- und Werkstoffforschung Dresden e.V.**
**01069 Dresden (DE)**
• **Forschungszentrum Dresden - Rossendorf e.V.**
**01328 Dresden (DE)**

(72) Erfinder:
• **PRIEDE, Janis**
**LV-2128 Balozi (LV)**
• **GERBETH, Gunter**
**01328 Dresden (DE)**
• **HERMANN, Regina**
**01187 Dresden (DE)**
• **FILIP, Octavian**
**90478 Nürnberg (DE)**

(74) Vertreter: **Rauschenbach, Marion**
**Rauschenbach Patentanwälte,**
**Bienertstrasse 15**
**01187 Dresden (DE)**

(56) Entgegenhaltungen:
DE-A- 2 807 307       FR-A- 2 658 745
GB-A- 1 421 121       RU-C- 2 111 088

• **DATABASE WPI Section Ch, Week 197845 Derwent Publications Ltd., London, GB; Class M25, AN 1978-81263A XP002303925 & JP 53 114713 A (NISHI Y) 6. Oktober 1978 (1978-10-06)**
• **DATABASE WPI Section Ch, Week 199403 Derwent Publications Ltd., London, GB; Class D21, AN 1994-024718 XP002303926 & SU 1 785 792 A1 (AS UKR CASTING PROBLEMS) 7. Januar 1993 (1993-01-07)**
• **DATABASE WPI Section Ch, Week 199117 Derwent Publications Ltd., London, GB; Class J04, AN 1991-123515 XP002303927 & SU 1 378 572 A (KORNIENKO I V) 23. August 1990 (1990-08-23)**
• **DATABASE WPI Section Ch, Week 198047 Derwent Publications Ltd., London, GB; Class L01, AN 1980-83996C XP002303928 & SU 727 570 A (MAGN MINE METAL) 15. April 1980 (1980-04-15)**

EP 1 641 947 B1

**Beschreibung**

Die Erfindung bezieht sich auf das Gebiet der Werkstoffwissenschaften und betrifft ein Verfahren zur schmelzmetallurgischen Herstellung von leitfähigen Legierungen, welche beispielsweise als Werkstoff für Hochleistungs-Dauermagnete zum Einsatz kommen können.

Die zunehmende Nachfrage nach Hochleistungs-Dauermagneten ist ungebrochen (Yuji Kaneko: Proc. 16th Int. Workshop on Rare-Earth Magnets and their Applications, Sendai, Japan, 10.-14, September 2000). Die ferromagnetischen Eigenschaften der Selten-Erd-Magnete beruhen auf den ausgezeichneten hartmagnetischen Eigenschaften der $Nd_2Fe_{14}B$-Phase ($\phi$-Phase) mit ihrer strukturellen Anisotropie, die 1984 von Sagawa et al.: J. Appl. Phys. 55 (1984) 2083 und Croat et al.: J. Appl. Phys. 55 (1984) 2078 entdeckt wurde. Das ternäre Phasendiagramm Nd-Fe-B in der heute verwendeten Form greift auf Arbeiten von Schneider et al.: Z. Metallkd. 77 (1986) 755 zurück. Die Eigenschaften realer Nd-Fe-B-Magnete weichen jedoch von den intrinsischen Eigenschaften (magnetokristalline Anisotropie, Sättigungsmagnetisierung) der $Nd_2Fe_{14}B$-Phase z.T. beträchtlich ab, da die magnetischen Eigenschaften der permanentmagnetischen Legierung außerordentlich sensibel von der Morphologie (extrinsische Eigenschaften) abhängig sind.

Die verbreitetste Herstellungsmethode von Nd-Fe-B-Dauermagneten ist die Pulvermetallurgie, darunter insbesondere das Sinterverfahren. Die Ingotherstellung von Sintermagneten erfolgt üblicherweise in Gießprozessen, die nahe dem thermodynamischen Gleichgewicht stattfinden. Die Verbesserung der extrinsischen Eigenschaften von Sintermagneten wird zum einen durch die Modifizierung des Gefüges über die Prozessparameter ermöglicht. Charakteristische Größen wie Phasenverteilung, Korngrößenverteilung und Form und Ausrichtung der Körner werden ebenso durch das Zulegieren von Additiven positiv beeinflusst. Wesentliche Aspekte bei der Herstellung der Magnetwerkstoffe sind die Unterdrückung unerwünschter Phasen (z.B. $\alpha$-Fe, B-reiche Phasen) und die Reduzierung von Kornwachstum während der Erstarrung und im Temperprozess. Es existiert eine Vielzahl von Arbeiten, die zeigten, dass sich durch Zulegieren von Additiven Veränderungen der Gefügemorphologie ergeben. Es wurde gefunden, dass Zusätze von Al, Ga (W. Rodewald, Proc. 9th Int. Workshop on Rare-Earth-Magnets and their Applications, Bad Soden (FRG) (1987) 609.; W. C. Chang, u.a.: 10th Int. Workshop on Rare-Earth Magnets and their Applications, Kyoto, Japan (1989) 509) oder Cu (L. Withanawasam, u.a.: J. Appl. Phys. 63 (1994), 6646) die Bildung spezieller intergranularer Phasen fördern und zu einer Kornglättung führen. Die Elemente Mo und V werden zur Unterdrückung der unerwünschten $NdFe_4B_4$-Phase bei gleichzeitiger Verfeinerung der Kornstruktur zugesetzt (G. C. Hajipanayis: Rare-Earth Ion Permanent Magnets, Edited by J. M. D. Coey, Clarendon Press, Oxford, (1996) 317). Kürzlich wurde gefunden, dass Zugaben von Ti und C eine beträchtliche Kornfeinung und Reduzierung des Volumenanteils der $\alpha$-Fe-Phase ermöglichen (M. J. Kramer, u.a.: J. Appl. Phys. 81 (8) (1997) 4459). Weitere Schritte zur Verbesserung der magnetischen Eigenschaften setzen im Herstellungsprozess selbst an. Temperprozesse dienen der Homogenisierung und der Umwandlung der $\alpha$-Fe-Phase in die hartmagnetische $Nd_2Fe_{14}B$-Phase via peritektische Reaktion, wobei allerdings ein verstärktes Kornwachstum nachteilig ist. Mit Hilfe von Wasserstoff kann im HDDR-Prozess (hydrogenation, disproportionation, desorption, recombination) feinkörniges koerzitives Pulver aus dem Gussmaterial hergestellt werden (I. R. Harris, u.a.: J. Less-Common Met.,106 (1985) L1). Eine sehr effektive Methode zur Herstellung einer uniaxialen Textur ist das Heißpressen (T. Shimoda, u.a.: J. Appl. Phys. 64 (1988) 5290).

Bei Verfahren wie dem RIP-Verfahren (rubber isostatic pressing), wird das Pulver in einer Kautschukgussform bei gleichzeitigem Einfluss eines starken gepulsten Magnetfeldes gepresst und ausgerichtet (M. Sagawa, u.a.: IEEE Trans. Mag., Mag-29 (1993) 2747).

Während der Abhängigkeit des Gefüges und damit der magnetischen Eigenschaften von o.g. Prozessparametem und Additiven zahlreiche Untersuchungen gewidmet wurden, ist der Einfluss der Hydrodynamik in der Schmelze auf die Erstarrungsprozesse völlig unzureichend bekannt, obwohl Technologien, wie das elektromagnetische Rühren von Schmelzen, in der Stahlindustrie beim Gießen von Al-Legierungen und in der Halbleiter-Kristallzüchtung Einzug gefunden haben. Experimentelle Untersuchungen zum Einfluss starker Turbulenzen bei der Produktion von Sn-Pb-Legierungen zeigten, dass starke Konvektion die Wachstumsgeschwindigkeit während der Erstarrung erhöht und zu einer Kornfeinung führt (S. Ji and Z. Fan: Metallurgical and Materials Transactions A, Volume 33, Issue 11, (2002) 3511).

Die Aufgabe der vorliegenden Erfindung besteht in der Angabe eines Verfahrens zur schmelzmetallurgischen Herstellung von leitfähigen Legierungen, durch die das Keimbildungs-, Wachstums- und Umwandlungsverhalten von sich bildenden Phasen und damit auch das Gefüges der erstarrten Legierung beeinflusst werden kann.

Die Aufgabe wird durch die in den Ansprüchen angegebene Erfindung gelöst. Weiterbildungen sind Gegenstand der Unteransprüche.

Bei dem erfindungsgemäßen Verfahren zur schmeizmetallurgischen Herstellung von leitfähigen Legierungen werden die Legierungen in einem Tiegel erschmolzen, wobei der Tiegel mindestens während des Erstarrens der Schmelze mit einer Frequenz rotiert, die nach Gleichung (1)

$$f = \frac{\nu}{2\pi E R^2} \qquad (1) \qquad \text{bei } E < 10^{-2}$$

mit

$f$ - Rotationsfrequenz
$\nu$ - kinematische Viskosität der Schmelze
$E$ - Ekman-Zahl $\qquad E = \nu/(\Omega R^2)$
$R$ - Radius des Schmelztiegels
$\Omega$ - Drehrate $\qquad \Omega = 2\pi f$

ermittelt wird.

Dabei kann das Erstarren der geschmolzenen leitfähigen Legierungen sowohl im rotierenden Tiegel, in dem das Material aufgeschmolzen worden ist, als auch in einem weiteren rotierenden Tiegel, in den das Material abgegossen wird, erfolgen.

Als leitfähige Legierungen können vorteilhafterweise peritektische Legierungen oder noch vorteilhafterweise Magnetlegierungen, insbesondere auf Nd-Fe-B-Basis eingesetzt werden.

Vorteilhafterweise wird die Rotation des Tiegels um seine vertikale Rotationsachse realisiert.

Weiterhin vorteilhafterweise wird die Rotation des Tiegels während des gesamten Schmelzvorganges realisiert.

Eine geeignete Vorrichtung zur schmelzmetallurgischen Herstellung von leitfähigen Legierungen gemäß der Erfindung besteht mindestens aus einem rotierenden Tiegel, in dem das Material induktiv aufgeschmolzen wird, und aus Einrichtungen zur Realisierung der Rotation und zur Beheizung des Tiegels, sowie Steuer- und Regeleinrichtungen für die Rotationsfrequenz.

Die Vorrichtung zur Durchführung des erfindungsgemäßen Verfahrens kann aus einem weiteren rotierenden Tiegel bestehen, in den die aufgeschmolzenen Legierungen abgegossen werden und in dem das Erstarren der Legierungen erfolgt.

Vorteilhafterweise werden Tiegel mit einer rotationssymmetrischen Form eingesetzt.

Ebenfalls vorteilhafterweise werden zylinderförmige Tiegel eingesetzt.

Von Vorteil ist es auch, wenn die Beheizung der Schmelze durch Induktion realisiert ist.

Vorteilhaft ist es weiterhin, wenn die Rotation des Tiegels über einen motorgesteuerten Antrieb erfolgt.

Mit dem erfindungsgemäßen Verfahren können leitfähige Legierungen in einem Tiegel erschmolzen werden. Dabei muss erfindungsgemäß der Tiegel mindestens während der Phase der Erstarrung der Schmelze mit einer Frequenz gemäß Gleichung (1) rotieren. Vorteilhafterweise rotiert der Tiegel während des gesamten Schmelz- und Erstarrungsvorganges der Schmelze.

Durch die Tiegelrotation wird die Schmelzkonvektion in der Weise beeinflusst, dass die Schmelzdynamik stark beruhigt wird. Durch die Rotation des Tiegels wird eine Beruhigung der Bewegung der Schmelzteilchen relativ zueinander hervorgerufen. Dies führt zur Beruhigung der Strömung innerhalb der Schmelze.

Hierzu wurden numerische Simulationen der Strömungsmuster durchgeführt, die zeigten, dass die Strömung in einem zylindrischen Körper, der um eine vertikale Achse rotiert, in Abhängigkeit von der Rotationsfrequenz bedeutend gedämpft wird.

Weiterhin haben die Untersuchungen gezeigt, dass eine beruhigte Schmelzkonvektion bei beispielsweise einer Magnetlegierung auf Nd-Fe-B-Basis zu einer Reduzierung des weichmagnetischen $\alpha$-Fe-Volumenanteils führt.

Weitere Beispiele für leitfähige Legierungen, die erfindungsgemäß hergestellt werden können, sind peritektisch erstarrende Legierungen, wie beispielsweise Fe-Ni-Verbindungen und die große Gruppe der Fe-C-Stähle. Bei letzteren kommt es z.B. darauf an, die peritektische Umwandlung, die bei geringen Kohlenstoffgehalten auftritt zu vermeiden, um die Eigenschaften beim Stranggießen zu verbessern.

Beispiele für leitfähige Legierungen in denen eine metastabile Mischungslücke auftritt, die vermieden werden soll, sind Cu-Co-Verbindungen und Fe-Cu-Verbindungen.

Ein weiteres sehr interessantes Beispiel ist Nb-Cu, das als hochfestes Leitermaterial eingesetzt wird. Hier entsteht neben der Primärphase Nb ein langer Resterstarrungsbereich, der zu unerwünschten Inhomogenitäten führt.

Zur Prüfung des Zusammenhanges von Tiegeldurchmesser und Rotationsfrequenz über die Vorschrift in Gleichung 1 wurden weitere Untersuchungen mit größeren Tiegeldurchmessern vorgenommen. Dabei konnte festgestellt werden, dass für eine Vergrößerung des Tiegeldurchmessers die einer konstanten Ekman-Zahl (siehe Gleichung 1) entsprechende Verringerung der Rotationsfrequenz zu den gleichen Ergebnissen führt. Damit ist der Einsatz von Tiegeln mit größeren Abmessungen ohne Probleme möglich.

Die dazu ermittelten Werte für den $\alpha$-Fe-Volumenanteil an Magnetlegierungen auf Nd-Fe-B-Basis sind in Tabelle 1 zusammengestellt.

Vor Durchführungen der Untersuchungen zum Einsatz eines rotierenden Tiegels wurde die Konvektion in einem flüssigen Metalltropfen aus einer Magnetlegierung auf Nd-Fe-B-Basis, der in einer sogenannten elektromagnetischen Levitationsanlage frei schwebend aufgeschmolzen und erstarrt wurde, untersucht. Der Schmelztropfen wird dabei durch einen Gasstrom abgekühlt, während die Induktionsspule zur Aufrechterhaltung des Schwebens während der Erstarrung eingeschaltet bleibt. Dies erzeugt im Unterschied zur vorliegenden Lösung eine zusätzliche elektromagnetisch getriebene Konvektionskraft. Dies ist beim Vergleich der Experimente zu berücksichtigen, ist aber für die qualitative Beschreibung des Effektes der Rotation des Schmelzkörpers nicht von Bedeutung. Im Levitationsexperiment wurde zum einen das Gefüge in einem in einer stabilen Position verharrenden Schmelztropfen nach der Erstarrung untersucht. Zum anderen wurde eine zusätzlich zur internen natürlich vorhandenen Schmelzkonvektion überlagerte Rotation des Tropfens von etwa 500 $min^{-1}$ erzeugt.

Die Ergebnisse dieser Untersuchungen zeigten eine feinere Struktur und einen reduzierten Anteil der $\alpha$-Fe-Dendriten bei Erstarrung unter Rotation. Das Ergebnis wurde verifiziert durch Messung des $\alpha$-Fe-Volumenanteils mittels Vibrationsmagnetometer. Dabei sind für die Proben ohne Rotation Werte für den $\alpha$-Fe-Volumenanteil von 28 Masse-% und für die Proben mit Rotation Werte für den $\alpha$-Fe-Volumenanteil von 15 Masse-% ermittelt worden.

Weiterhin sind die Strömungsmuster in einem levitierten Tropfen ohne und mit Tropfenrotation berechnet worden. Die Berechnung erfolgte nach der aus Phys. Fluids, Vol. 15, No. 3, 668-678, 2003 bekannten Vorschrift. Die Rechnungen zeigten, dass die Relativbewegung im Tropfen für E < $10^{-2}$ mit wachsender Rotationsfrequenz des Tropfens deutlich sinkt. Die Bewegung des Tropfens ähnelt für wachsende Rotationsfrequenz zunehmend einer Festkörperrotation, das heißt, die interne Schmelzkonvektion wird stark reduziert.

Zur Definition der Ekman-Zahi wird auf "Encyclopedia of applied physics", Vol. 9, Hrsg. George L. Trigg, Seite 150ff, New York 1996, verwiesen.

Im Weiteren ist die Erfindung an mehreren Ausführungsbeispielen näher erläutert.

Beispiel 1

Eine Nd-Fe-B-Legierung der stöchiometrischen Zusammensetzung $Nd_{11.8}Fe_{82.3}B_{5.6}$ (at.%) mit einer kinematischen Viskosität von $\nu = 0.8\times10\text{-}6\ m^2/s$ mit einem Volumen von 565 $mm^3$ wird in einem Tiegel aus Quarzglas mit den Abmessungen 6 mm Durchmesser und 20 mm Höhe aufgeschmolzen. Das Aufschmelzen erfolgt induktiv mit einer Induktionsspule. Während des Aufschmelzens wird der Tiegel durch einen Motor in Rotation versetzt. Die Rotationsfrequenzen und der jeweils erzielte $\alpha$-Fe - Volumenanteil sind in Tabelle 1 angegeben.

Tabelle 1: $\alpha$-Fe-Volumenanteil in Abhängigkeit von der Rotationsfrequenz $f$ ($min^{-1}$)

|  | Versuch 1 | Versuch 2 | Versuch 3 |
|---|---|---|---|
| $f$ ($min^{-1}$) | 96 | 498 | 2496 |
| $\alpha$-Fe (Vol.-%) | 24 | 22 | 18 |

Es konnte festgestellt werden, dass die zunehmende Rotation des Tiegels zu einer immer stärkeren Beruhigung der Schmelzkonvektion führt und diese stärkere Beruhigung der Schmelzkonvektion zu einer zunehmenden Reduzierung des $\alpha$-Fe - Volumenanteils führt.

Beispiel 2

Gemäß Beispiel 1 wurde eine Nd-Fe-B-Legierung der stöchiometrischen Zusammensetzung $Nd_{11.8}Fe_{82.3}B_{5.6}$ (at.%) mit einer kinematischen Viskosität von $\nu = 0.8\times10^{-6}\ m^2/s$ mit einem Volumen von 5087 $mm^3$ in einem Tiegel aus Quarzglas mit den Abmessungen Durchmesser 18 mm und Höhe 20 mm aufgeschmolzen. Das Aufschmelzen erfolgte induktiv mit einer Induktionsspule. Während des Aufschmelzens wird der Tiegel durch einen Motor in Rotation versetzt. Die Rotationsfrequenz und der erzielte $\alpha$-Fe - Volumenanteil sind in Tabelle 2 angegeben.

Tabelle 2. $\alpha$-Fe - Volumenanteil in Abhängigkeit von der Rotationsfrequenz $f$ ($min^{-1}$)

|  | Versuch 4 | Versuch 5 |
|---|---|---|
| $f$ ($min^{-1}$) | 55,5 | 278 |
| $\alpha$-Fe | 21,88 | 18,54 |

(fortgesetzt)

|  | Versuch 4 | Versuch 5 |
|---|---|---|
| (Vol.-%) |  |  |

Es konnte festgestellt werden, dass auch bei größeren Proben- und Tiegelvolumen eine starke Beruhigung der Schmelzkonvektion eintritt und diese stärkere Beruhigung der Schmelzkonvektion zu einer zunehmenden Reduzierung des $\alpha$-Fe-Volumenanteils führt.

Weiterhin konnte festgestellt werden, dass für Proben mit einem ca.10-fach höheren Volumen eine vergleichbare Reduzierung des $\alpha$-Fe- Volumenanteils bei einer deutlich gesenkten Rotationsfrequenz erreicht werden konnte.

**Patentansprüche**

1. Verfahren zur schmelzmetallurgischen Herstellung von leitfähigen Legierungen, bei dem die Legierungen in einem Tiegel erschmolzen werden, wobei der Tiegel mindestens während des Erstarrens der Schmelze mit einer Frequenz rotiert, die nach Gleichung (1)

$$f = \frac{\nu}{2\pi ER^2} \quad (1) \quad \text{bei } E < 10^{-2}$$

mit

$f$ - Rotationsfrequenz
$\nu$ - kinematische Viskosität der Schmelze
E - Ekman-Zahl $\quad E = \nu/(\Omega R^2)$
R - Radius des Schmelztiegels
$\Omega$ - Drehrate $\quad \Omega = 2\pi f$

ermittelt wird.

2. Verfahren nach Anspruch 1, bei dem als leitfähige Legierungen peritektische Legierungen hergestellt werden.

3. Verfahren nach Anspruch 1, bei dem als leitfähige Legierungen Magnetlegierungen auf Nd-Fe-B-Basis hergestellt werden.

4. Verfahren nach Anspruch 1, bei dem die Rotation des Tiegels um seine vertikale Rotationsachse realisiert wird.

5. Verfahren nach Anspruch 1, bei dem die Rotation des Tiegels während des gesamten Schmelzvorganges realisiert wird.

**Claims**

1. Method for the melt-metallurgical production of conductive alloys, in which the alloys are melted in a crucible, the crucible being rotated, at least during the solidifying of the melt, at a frequency determined in accordance with equation (1)

$$f = \frac{\nu}{2\pi ER^2} \quad (1) \quad \text{in which } E < 10^{-2}$$

where

f is the rotational frequency
ν is the kinematic viscosity of the melt
E is the Ekman number       $E = \nu/(\Omega R2)$
R is the radius of the melting crucible
$\Omega$ is the rate of rotation      $\Omega = 2\pi f$.

2. Method according to Claim 1, in which peritectic alloys are produced as conductive alloys.

3. Method according to Claim 1, in which Nd-Fe-B-based magnetic alloys are produced as conductive alloys.

4. Method according to Claim 1, in which the rotation of the crucible is realized about its vertical axis of rotation.

5. Method according to Claim 1, in which the rotation of the crucible is realized during the entire melting operation.

**Revendications**

1. Procédé pour la production par métallurgie de fusion d'alliages conducteurs, dans lequel les alliages sont fondus dans un creuset, le creuset tournant au moins pendant la solidification de la fusion à une fréquence déterminée par l'équation (1)

$$f = \frac{\nu}{2\pi ER^2} \quad (1) \text{ pour } E < 10^{-2}$$

avec

f = fréquence de rotation
ν = viscosité cinématique de la fusion
E = indice d'Ekman      $E = \nu/(\Omega R^2)$
R = rayon du creuset de fusion
$\Omega$ = Vitesse de rotation      $\Omega = 2\pi f$.

2. Procédé selon la revendication 1, dans lequel on produit en tant qu'alliages conducteurs des alliages péritectiques.

3. Procédé selon la revendication 1, dans lequel on produit en tant qu'alliages conducteurs des alliages magnétiques à base de Nd-Fe-B.

4. Procédé selon la revendication 1, dans lequel la rotation du creuset est réalisée autour de son axe de rotation vertical.

5. Procédé selon la revendication 1, dans lequel la rotation du creuset est réalisée pendant toute l'opération de fusion.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **YUJI KANEKO.** *Proc. 16th Int. Workshop on Rare-Earth Magnets and their Applications,* 10. September 2000
- **SAGAWA et al.** *J. Appl. Phys.,* 1984, vol. 55, 2083
- **CROAT et al.** *J. Appl. Phys.,* 1984, vol. 55, 2078
- **SCHNEIDER et al.** *Z. Metallkd.,* 1986, vol. 77, 755
- **W. RODEWALD.** *Proc. 9th Int. Workshop on Rare-Earth-Magnets and their Applications,* 1987, 609
- **W. C. CHANG.** *10th Int. Workshop on Rare-Earth Magnets and their Applications,* 1989, 509
- **L. WITHANAWASAM.** *J. Appl. Phys.,* 1994, vol. 63, 6646
- **G. C. HAJIPANAYIS.** Rare-Earth Ion Permanent Magnets. Clarendon Press, 1996, 317
- **M. J. KRAMER.** *J. Appl. Phys.,* 1997, vol. 81 (8), 4459
- **I. R. HARRIS.** *J. Less-Common Met,* 1985, vol. 106, L1
- **T. SHIMODA.** *J. Appl. Phys.,* 1988, vol. 64, 5290
- **M. SAGAWA.** *IEEE Trans. Mag.,* 1993, vol. 29, 2747
- **S. JI ; Z. FAN.** *Metallurgical and Materials Transactions A,* 2002, vol. 33 (11), 3511
- *Phys. Fluids,* 2003, vol. 15 (3), 668-678
- **EKMAN-ZAHI.** Encyclopedia of applied physics. 1996, vol. 9, 150